# FASCICULE DE BREVET EUROPEEN

(11) **EP 0 922 392 B1**
(45) Date de publication et mention de la délivrance du brevet: **26.03.2003**
(21) Numéro de dépôt: 97203917.6
(22) Date de dépôt: 12.12.1997
(51) Int. Cl.: A23J 3/34, A23L 1/305

(54) **Procédé de fabrication d'un aliment à base d'hydrolysat de protéines**
Verfahren zur Herstellung eines Nahrungsmittels auf der Basis von Eiweisshydrolysat
Process for manufacturing a protein hydrolysate based food

(43) Date de publication de la demande: 16.06.1999
(73) Titulaire: SOCIETE DES PRODUITS NESTLE S.A., 1800 Vevey (CH)
(72) Inventeur: Braun, Marcel, 3510 Konolfingen (CH); Schaedeli, Roland, 3280 Murten (CH)
(74) Mandataire: Archambault, Jean

(56) Documents cités:
- EP-A- 0 322 589
- EP-A- 0 744 132
- WO-A-85/04556
- DATABASE WPI Section Ch, Week 7619 Derwent Publications Ltd., London, GB; Class D13, AN 76-34946X XP002065320 & JP 51 035 461 A (AJINOMOTO KK)
- DATABASE WPI Section Ch, Week 9434 Derwent Publications Ltd., London, GB; Class D13, AN 94-277415 XP002065321 & RU 2 007 932 C (BIO-KONSUM RES PRODN FIRM)

## Description

L'invention se rapporte au domaine des hydrolysats de protéines liquides et des formules infantiles hypoallergéniques contenant des hydrolysats de protéines sous forme liquide.

On connaît, par exemple dans EP-A-0322589, un procédé de préparation d'un hydrolysat de protéines lactiques selon lequel on hydrolyse enzymatiquement un produit lactosérique, par charges ou en semi-continu, en deux étapes d'hydrolyse séparées par un traitement thermique. A la fin de la seconde hydrolyse, l'on inactive l'enzyme par un traitement thermique final, ce qui favorise son autodigestion.

EP-A-0 744 132 divulgue un procédé de fabrication d'un hydrolysat de protéines comestible.

Selon un autre procédé, décrit par exemple dans FR-A-2634104, on prépare un hydrolysat partiel de protéines de lactosérum par hydrolyse enzymatique, puis après un traitement thermique, l'on sépare les enzymes et les protéines résiduelles non hydrolysées par ultrafiltration et l'on recueille l'hydrolysat en tant que perméat contenant les peptides et les acides aminés que l'on veut obtenir.

Dans les procédés connus, l'on utilise un excès d'enzyme que l'on doit ensuite éliminer. Les enzymes sont très chères et les traitements thermiques sévères nécessaires à leur inactivation induisent une détérioration de la qualité des produits, par exemple sous forme de coloration ou de goût altérés, d'instabilité des émulsions ou de baisse de la valeur nutritionnelle.

Le but de l'invention est de fournir un procédé de préparation d'un produit alimentaire à base d'hydrolysat de protéines qui soit économique et qui n'induise pas de détérioration des qualités organoleptiques et nutritionnelles des produits.

L'invention concerne un procédé de fabrication d'un aliment à base d'hydrolysat de protéines sous forme liquide, dans lequel on hydrolyse enzymatiquement, on stérilise et on conditionne aseptiquement une matière première contenant des protéines, caractérisé par le fait que l'on ajuste le pH de la matière première liquide non hydrolysée ou partiellement hydrolysée à une valeur comprise entre 6 et 9 par addition d'une base avant ou après stérilisation et dans ce dernier cas par addition d'une base stérilisée, que l'on y ajoute aseptiquement une enzyme protéolytique en quantité juste suffisante pour réaliser le degré d'hydrolyse souhaité des protéines contenues dans la matière première, que l'on conditionne aseptiquement le mélange à chaud dans des emballages que l'on ferme hermétiquement et que l'on laisse au repos le mélange emballé de manière à réaliser l'hydrolyse dans l'emballage.

Pour mettre en oeuvre le présent procédé, on peut partir de toute matière première liquide contenant des protéines d'origine végétale ou animale. En tant que protéines végétales on peut citer les protéines de céréales et de légumineuses, par exemple de soja ou de riz. Une matière protéique animale de choix peut être un lactosérum de fromagerie, notamment un lactosérum doux tel que celui résultant de la coagulation de la caséine par la présure, un lactosérum acide provenant de la coagulation de la caséine par un acide ou par les ferments acidifiants ou encore un lactosérum mixte résultant d'une coagulation acide et présure.

Ce peut être un concentrat de protéine de lactosérum plus ou moins délactosé, obtenu notamment par ultrafiltration le cas échéant suivie d'une diafiltration.

Ce peut être un lactosérum ou un concentrat de protéine de lactosérum précédent plus ou moins déminéralisé, notamment par échange d'ions, électrodialyse, électrodéionisation ou par combinaison de ces méthodes.

On peut citer également le lait écrémé ou un caséinate. Les sources de protéines précédentes peuvent se présenter sous forme de solution aqueuse ou de poudre. La matière première liquide peut être reconstituée à partir de poudres et résulter d'un mélange des matières précédentes et le cas échéant de lactose. Dans ce cas, on dissout la poudre dans de l'eau, de préférence déminéralisée, de manière à former une solution aqueuse.

La matière première liquide peut être non hydrolysée ou avoir été partiellement hydrolysée. Dans ce dernier cas, elle peut avoir subi une hydrolyse enzymatique partielle par les enzymes protéolytiques en mélange ou purifiées, actives dans les domaines basique et neutre, notamment la trypsine, la chymotrypsine ou la pancréatine. Une telle hydrolyse peut être pratiquée pendant un temps relativement court , de préférence 1 à quelques h avec une quantité faible d'enzyme, correspondant par exemple à environ 00,1 - 0,1 % en poids, basé sur la quantité de substrat protéique (calculée comme N x 6,38).

Après avoir dissout les constituants de la matière première dans l'eau, de préférence déionisée, on préchauffe le mélange liquide, on y ajoute de la matière grasse et un émulsifiant, puis on homogénéise le mélange et on y ajoute des hydrates de carbone, des minéraux, des vitamines et des oligoéléments.

Selon un premier mode de réalisation du procédé, mettant en oeuvre une matière première non hydrolysée, on traite thermiquement le liquide par UHT, on le refroidit par détente flash, puis on l'homogénéise aseptiquement. On y ajoute ensuite une solution aqueuse d'enzyme stérilisée par microfiltration et on entrepose le mélange stérile dans une cuve tampon stérile. Dans cette cuve tampon, on règle le pH à environ 8 par addition d'une solution aqueuse de base ayant été stérilisée séparément. On peut en variante ajouter la solution d'enzyme stérilisée dans la cuve tampon ou encore juste avant le remplissage.

Selon un second mode de mise en oeuvre du procédé, dans lequel la matière première est partiellement hydrolysée, on ajuste le pH du mélange liquide à une valeur > à 7 préalablement au traitement thermique par UHT. On réalise les opérations ultérieures de refroidissement par détente flash, d'homogénéisation aseptique, d'addition d'une solution d'enzyme stérilisée et d'entreposage dans une cuve tampon stérile comme indiqué précédemment, mis à part le fait que l'on peut se dispenser du réglage du pH dans la cuve tampon.

Les additions d'enzyme et de base peuvent également avoir lieu en continu directement dans un flux de mélange liquide stérilisé.

On peut utiliser à titre d'enzyme une protéase, agissant dans le domaine neutre à alcalin, qui peut être d'origine microbienne ou animale, par exemple d'origine porcine ou bovine. Elle peut être de préférence choisie parmi la trypsine, la chymotrypsine, un mélange de trypsine et de chymotrypsine et la pancréatine. Elle peut se présenter sous forme brute ou sous forme purifiée, de préférence sans activité lipase ou phospholipase A2 résiduelle, sous forme purifiée par le procédé objet de la demande de brevet EP-A-97202591.0. On utilise de préférence de la trypsine commerciale, à raison de 0,01 - 0,2 % en poids, basé sur la quantité de substrat protéique (calculé comme N x 6,38).

Dans l'étape suivante, on remplit aseptiquement des emballages, par exemple de type brique ou boîte métallique, que l'on ferme hermétiquement. Le remplissage peut avoir lieu à température allant de l'ambiante à chaude, de préférence à chaud, à 30-65° C. Dans le cas où l'on désire réaliser seulement une hydrolyse partielle, on peut opérer à température ambiante. On maintient ensuite les emballages remplis à 55-65° C pendant une durée allant de quelques h à 1 semaine, de manière à opérer l'hydrolyse jusqu'à l'équilibre en consommant la totalité de l'enzyme. On peut par exemple utiliser à cet effet un local thermostatisé. En variante, une manière avantageuse de réaliser cette étape peut être, par exemple, de grouper les emballages en cartons et les cartons en palettes suremballées par une feuille de matière plastique. On peut bien entendu entreposer les emballages remplis à température ambiante dans le cas où l'on désire réaliser une hydrolyse partielle.

Les exemples ci-après illustrent le procédé de l'invention. Dans ceux-ci, les parties et pourcentages sont pondéraux, sauf indication contraire.

### Exemple 1

On dissout un mélange contenant 85 % de poudre de lactosérum doux déminéralisé à environ 50 %, 10 % de poudre de lait écrémé et 5 % de caséinate de potassium dans 90 parties d'eau desionisée et on ajuste le pH de la solution à 6,6 au moyen d'une solution aqueuse d'acide citrique.

Après préchauffage de la solution à 75° C, on y ajoute un mélange de lipides ayant été lui-même préchauffé à 70° C et composé d'huile de palme, d'huile de soja, d'huile de noix de coco, d'huile de pépins de cassis, d'huile de poisson et de lécithine d'oeuf.

On homogénéise le tout en deux étages à 200 bar, puis à 50 bar, puis on le chauffe à 90° C/5 min. et on le refroidit à 15° C. On ajoute à l'émulsion de la maltodextrine, un prémix d'elements traces, un prémix de vitamines et des sels minéraux, en faisant en sorte que la teneur en matière sèche soit de 12,5 % environ.

On stérilise l'émulsion précédente à 148° C/5 s. par UHT, puis on la refroidit par détente flash à 70° C. Après homogénéisation dans des conditions stériles en deux étages, d'abord à 250 bar, puis à 50 bar, on la refroidit à 20° C.

On prépare séparément une solution de trypsine commerciale contenant environ 25 % de trypsine (PTN 6.0 S, Novo) à 1 % dans l'eau désionisée, de pH 3, que l'on stérilise par passage à travers un filtre à double membrane de 0,45 micron, puis 0,2 micron, on ajoute celle-ci en ligne dans l'émulsion et on entrepose le tout dans une cuve tampon stérile. On ajuste le pH du liquide à 8 par addition d'une solution aqueuse d'hydroxyde de potassium ayant été préalablement stérilisée par la vapeur, puis refroidie. La quantité de trypsine commerciale dans le liquide est environ 25 ppm (partie par million).

Après remplissage aseptique de boîtes stériles à 60 - 65° C et fermeture hermétique de ces récipients, on les groupe dans des cartons et les cartons en palettes sous film thermoplastique et on les entrepose à 55 - 65° C pendant 3 j.

Après ce délai, on constate que lorsque l'on refroidit les récipients à la température ambiante, il n'y a plus aucune hydrolyse détectable par mesure du pH, celui-ci étant stabilisé à environ 6,8. Lorsque l'on analyse les protéines résiduelles dans le produit par électrophorèse de zone en gel de sodium dodécyl-sulfate polyacrylamide (méthode SDS-PAGE, très sensible), on ne peut détecter aucune protéine non hydrolysée résiduelle, ni aucun fragment de protéine.

De plus la couleur des produits est semblable à celle des produits fabriqués avec les méthodes conventionnelles, cependant que le goût est nettement moins amer. La lysine est également nettement moins bloquée que pour les produits fabriqués avec les méthodes conventionnelles. Il n'y pas ni séparation de phases ni sédimentation.

### Exemple 2

On procède comme à l'exemple 1, mais en utilisant la même quantité de trypsine purifiée selon le procédé décrit dans la demande de brevet européen No EP-A-97202591.0.

Les qualités des produits obtenus sont semblables à celles des produits préparés selon l'exemple 1, mis à part l'amélioration supplémentaire de qualité due à l'absence de phospholipase résiduelle susceptible de dégrader la lécithine contenue dans les produits.

### Exemples 3-4

On procède comme aux exemples 1 (pour l'exemple 3) et 2 (pour l'exemple 4), mis à part le fait que l'on traite une solution protéique de départ composée de 10 parties d'un mélange protéique contenant 82 % de poudre de lactosérum doux déminéralisé à environ 80 % et 18 % de poudre de concentrat de lactosérum acide déminéralisé à 80 % et de 90 parties d'eau desionisée et que l'on ajuste le pH de la solution à 3,3 au moyen d'une solution aqueuse d'acide citrique, d'acide chlorhydrique ou d'acide phosphorique. Les produits obtenus ont les mêmes qualités que ceux des exemples 1, respectivement 2.

### Exemples 5-6

On procède comme aux exemples 1 (pour l'exemple 5) et 2 (pour l'exemple 6), mis à part le fait que l'on traite une solution protéique de départ composée de 10 parties d'un mélange protéique contenant 81 % de poudre de lactosérum doux déminéralisé à environ 80 % et 19 % de poudre de concentrat de lactosérum doux déminéralisé à 80 % et de 90 parties d'eau desionisée et que l'on ajuste le pH de la solution à 6,9 au moyen d'une solution aqueuse d'acide citrique. Les produits obtenus ont les mêmes qualités que ceux des exemples 1, respectivement 2.

### Exemple 7

On effectue une première hydrolyse d'un mélange contenant 85 % de poudre de lactosérum doux déminéralisé à environ 50 %, 10 % de poudre de lait écrémé et 5 % de caséinate de potassium dans 90 parties d'eau desionisée, dont on a ajusté le pH à 8 par addition d'une dispersion aqueuse de Ca(OH)2, dans un réacteur à double paroi thermostaté à 55° C pendant 5 h. Après la réaction, le pH du milieu est 7,4.

Après préchauffage de la solution à 75° C, on y ajoute un mélange de lipides ayant été lui-même préchauffé à 70° C et composé d'huile de palme, d'huile de soja, d'huile de noix de coco, d'huile de pépins de cassis, d'huile de poisson et de lécithine d'oeuf.

On homogénéise le tout en deux étages à 200 bar, puis à 50 bar, puis on le chauffe à 90° C/5 min. et on le refroidit à 15° C. On ajoute à l'émulsion de la maltodextrine, un prémix d'elements traces, un prémix de vitamines et des sels minéraux, en faisant en sorte que la teneur en matière sèche soit de 12,5 % environ.

On stérilise l'émulsion précédente à 148° C/5 s. par UHT, puis on la refroidit par détente flash à 70° C. Après homogénéisation dans des conditions stériles en deux étages, d'abord à 250 bar, puis à 50 bar, on la refroidit à 20° C.

On prépare séparément une solution de trypsine commerciale contenant environ 25 % de trypsine (PTN 6.0 S, Novo) à 1 % dans l'eau désionisée, de pH 3, que l'on stérilise par passage à travers un filtre à double membrane de 0,45 micron, puis 0,2 micron, on ajoute celle-ci en ligne dans l'émulsion et on entrepose le tout dans une cuve tampon stérile. La quantité de trypsine commerciale dans le liquide est environ 10 ppm (partie par million).

Après remplissage aseptique de boîtes stériles à 60 - 65° C et fermeture hermétique de ces récipients, on les groupe dans des cartons et les cartons en palettes sous film thermoplastique et on les entrepose à 55 - 65° C pendant 3 j.

Après ce délai, on constate que lorsque l'on refroidit les récipients à la température ambiante, il n'y a plus aucune hydrolyse détectable par mesure du pH, celui-ci étant stabilisé à environ 6,8. Lorsque l'on analyse les protéines résiduelles dans le produit par électrophorèse de zone en gel de sodium dodécyl-sulfate polyacrylamide (méthode SDS-PAGE, très sensible), on ne peut détecter aucune protéine non hydrolysée résiduelle, ni aucun fragment de protéine.

De plus la couleur des produits est semblable à celle des produits fabriqués avec les méthodes conventionnelles, cependant que le goût est nettement moins amer. La lysine est également nettement moins bloquée que pour les produits fabriqués avec les méthodes conventionnelles. Il n'y pas ni séparation de phases ni sédimentation.

### Exemple 8

On procède comme à l'exemple 7, mais en utilisant la même quantité de trypsine purifiée selon le procédé décrit dans la demande de brevet européen No EP-A-97202591.0.

Les qualités des produits obtenus sont semblables à celles des produits préparés selon l'exemple 1, mis à part l'amélioration supplémentaire de qualité due à l'absence de phospholipase résiduelle susceptible de dégrader la lécithine contenue dans les produits.

### Exemples 9-10

On procède comme aux exemples 7 (pour l'exemple 9) et 8 (pour l'exemple 10), mis à part le fait que l'on traite une solution protéique de départ composée de 10 parties d'un mélange protéique contenant 82 % de poudre de lactosérum doux déminéralisé à environ 80 % et 18 % de poudre de concentrat de lactosérum acide déminéralisé à 80 % et de 90 parties d'eau desionisée. Les produits obtenus ont les mêmes qualités que ceux des exemples 7, respectivement 8.

### Exemples 11-12

On procède comme aux exemples 7 (pour l'exemple 11) et 8 (pour l'exemple 12), mis à part le fait que l'on traite une solution protéique de départ composée de 10 parties d'un mélange protéique contenant 81 % de poudre de lactosérum doux déminéralisé à environ 80 % et 19 % de poudre de concentrat de lactosérum doux déminéralisé à 80 % et de 90 parties d'eau desionisée. Les produits obtenus ont les mêmes qualités que ceux des exemples 7, respectivement 8.

## Revendications

1. Procédé de fabrication d'un aliment à base d' hydrolysat de protéines sous forme liquide, dans lequel on hydrolyse enzymatiquement, on stérilise et on conditionne aseptiquement une matière première contenant des protéines, **caractérisé par le fait que** l'on ajuste le pH de la matière première liquide non hydrolysée ou partiellement hydrolysée à une valeur comprise entre 6 et 9 par addition d'une base avant ou après stérilisation et dans ce dernier cas par addition d'une base stérilisée, que l'on y ajoute aseptiquement une enzyme protéolytique en quantité juste suffisante pour réaliser le degré d'hydrolyse souhaité des protéines contenues dans la matière première, que l'on conditionne aseptiquement le mélange à chaud dans des emballages que l'on ferme hermétiquement et que l'on laisse au repos le mélange emballé de manière à réaliser l'hydrolyse dans l'emballage.

2. Procédé selon la revendication 1, **caractérisé par le fait que** l'on traite toute matière première liquide contenant des protéines d'origine végétale ou animale, notamment en tant que protéines végétales les protéines de céréales et de légumineuses, notamment de soja ou de riz et en tant que matière protéique animale un lactosérum de fromagerie, notamment un lactosérum doux tel que celui résultant de la coagulation de la caséine par la présure, un lactosérum acide provenant de la coagulation de la caséine par un acide ou par les ferments acidifiants ou encore un lactosérum mixte résultant d'une coagulation acide et présure, ainsi que de telles matières premières déminéralisées, concentrées seules ou en mélange.

3. Procédé selon la revendication 2, **caractérisé par le fait que** l'on traite un concentrat de protéine de lactosérum plus ou moins délactosé, obtenu notamment par ultrafiltration le cas échéant suivie d'une diafiltration, un lactosérum ou un concentrat de protéine de lactosérum plus ou moins déminéralisé, notamment par échange d'ions, électrodialyse, électrodéionisation ou par combinaison de ces méthodes, le lait écrémé ou un caséinate.

4. Procédé selon la revendication 1, **caractérisé par le fait que** la matière première liquide peut être non hydrolysée ou avoir été partiellement hydrolysée.

5. Procédé selon la revendication 1, **caractérisé par le fait qu'**après avoir dissout les constituants de la matière première dans l'eau, notamment déionisée, on préchauffe le mélange liquide, on y ajoute de la matière grasse et un émulsifiant, puis on homogénéise le mélange et on y ajoute des hydrates de carbone, des minéraux, des vitamines et des oligoéléments.

6. Procédé selon la revendication 1, **caractérisé par le fait que** l'on met en oeuvre une matière première non hydrolysée, on traite thermiquement le liquide par UHT, on le refroidit par détente flash, puis on l'homogénéise aseptiquement, que l'on y ajoute ensuite une solution aqueuse d'enzyme stérilisée par microfiltration et que l'on entrepose le mélange stérile dans une cuve tampon stérile dont on règle le pH à environ 8 par addition d'une solution aqueuse de base ayant été stérilisée séparément.

7. Procédé selon la revendication 1, **caractérisé par le fait que** l'on met en oeuvre une matière première partiellement hydrolysée, que l'on ajuste le pH du mélange liquide à une valeur > à 7, que l'on traite thermiquement le liquide par UHT, qu'on le refroidit par détente flash, puis qu'on l'homogénéise aseptiquement, que l'on y ajoute ensuite une solution aqueuse d'enzyme stérilisée par microfiltration et que l'on entrepose le mélange stérile dans une cuve tampon stérile.

8. Procédé selon la revendication 1, **caractérisé par le fait que** l'on utilise à titre d'enzyme une protéase, agissant dans le domaine neutre à alcalin, qui peut être d'origine microbienne ou animale, notamment d'origine porcine ou bovine, de préférence choisie parmi la trypsine, la chymotrypsine, un mélange de trypsine et de chymotrypsine et la pancréatine, sous forme brute ou de préférence sous forme purifiée sans activité lipase ou phospholipase A2 résiduelle.

9. Procédé selon la revendication 1, **caractérisé par le fait que** l'on remplit aseptiquement des emballages, que l'on ferme hermétiquement, que le remplissage a lieu à température allant de l'ambiante à 65° C, que l'on maintient ensuite les emballages remplis à 55-65° C pendant une durée allant de quelques h à 1 semaine, de manière à opérer l'hydrolyse jusqu'à l'équilibre en consommant la totalité de l'enzyme.

10. Aliment à base d'hydrolysat de protéines sous forme liquide susceptible d'être obtenu par la mise en oeuvre du procédé selon l'une des revendications 1 à 9.

## Claims

1. Method for manufacturing a food based on a protein hydrolyse in liquid form, wherein a starting material containing enzymatically hydrolysed proteins is sterilised and packaged aseptically, **characterised in that** the pH of the non-hydrolysed or partially hydrolysed starting material is adjusted to a value of between 6 and 9 by adding a base before or after sterilisation, and in the latter case by adding a sterilised base, **in that** a proteolytic enzyme is added aseptically in a quantity just sufficient to produce the desired degree of hydrolysis of the proteins contained in the starting material, **in that** the mixture is packaged aseptically hot in packages that are hermetically sealed and **in that** the packaged mixture is allowed to stand so as to effect hydrolysis within the package.

2. Method according to claim 1, **characterised in that** any liquid starting material is treated that contains proteins of vegetable or animal origin, in particular as regards vegetable proteins the proteins of cereals and leguminous plants, in particular soya or rice, and as regards animal protein material a cheese whey, in particular a basic whey such as that resulting from the coagulation of casein by rennet, an acid whey derived from the coagulation of casein by an acid or by acidifying ferments, or furthermore a mixed whey resulting from acid coagulation and rennet, as well as such demineralised starting materials, concentrated alone or as a mixture.

3. Method according to claim 2, **characterised in that** a whey protein concentrate is treated that is reduced in lactose to a greater or lesser extent, obtained in particular by ultrafiltration optionally followed by diafiltration, a whey or a whey protein concentrate that is demineralised to a greater or lesser extent, in particular by ion exchange, electrodialysis, electrodeinonisation or by a combination of these methods, skimmed milk or a caseinate.

4. Method according to claim 1, **characterised in that** the liquid starting material may be non-hydrolysed or have been partially hydrolysed.

5. Method according to claim 1, **characterised in that** after having dissolved the constituents of the starting material in water, in particular deionised water, the liquid mixture is preheated, fats and an emulsifier are added and the mixture is then homogenised and carbohydrates are added as well as minerals, vitamins and trace elements.

6. Method according to claim 1, **characterised in that** a non-hydrolysed starting material is used, the liquid is heat treated by UHT, is cooled by flash expansion, and is then aseptically homogenised, **in that** an aqueous enzyme solution that is sterilised by microfiltration is then added, and **in that** the sterile mixture is stored in a sterile holding vat of which the pH is adjusted to approximately 8 by adding an aqueous solution of the base that has been separately sterilised.

7. Method according to claim 1, **characterised in that** a partially hydrolysed starting material is used, **in that** the pH of the liquid mixture is adjusted to a value >7, **in that** the liquid is heat treated by UHT, **in that** it is cooled by flash expansion, and then homogenised aseptically, **in that** an aqueous enzyme solution is then added which is sterilised by microfiltration and **in that** the sterile mixture is stored in a sterile buffer vessel.

8. Method according to claim 1, **characterised in that** a protease is used as an enzyme, acting in the neutral to alkaline range, which may be of microbial or animal origin, in particular of porcine or bovine origin, preferably chosen from trypsin, chymotrypsin, a mixture of trypsin and chymotrypsin and pancreatin, in the untreated form or preferably in a purified form without residual lipase or phospholipase A2 activity.

9. Method according to claim 1, **characterised in that** packages are filled aseptically, **in that** they are hermetically sealed, that filling is carried out at a temperature extending from ambient to 65°C, and **in that** the filled packages are then held at 55-65°C for a period extending from a few hours to one week, so as to effect hydrolysis to equilibrium while consuming all the enzyme.

10. Food based on a protein hydrolysate in liquid form capable of being obtained by implementing the method according to one of claims 1 to 9.

## Patentansprüche

1. Verfahren zur Herstellung eines Nahrungsmittels auf der Basis von Proteinhydrolysat in flüssiger Form, bei dem man ein Proteine enthaltendes Ausgangsmaterial enzymatisch hydrolysiert, sterilisiert und keimfrei verpackt, **dadurch gekennzeichnet, daß** man den pH-Wert des nicht hydrolysierten oder partiell hydrolysierten flüssigen Ausgangsmaterials durch Zusetzen einer Base vor oder nach Sterilisation, im zweiten Fall durch Zusetzen einer sterilisierten Base, auf einen Wert zwischen 6 und 9 einstellt, daß man ein proteolytisches Enzym in einer Menge keimfrei zusetzt, die gerade ausreicht, um den gewünschten Hydrolysegrad der im Ausgangsmaterial enthaltenen Proteine zu erreichen, daß man die Mischung in der Wärme aseptisch in Verpackungen verpackt, daß man sie luftdicht verschließt und daß man die verpackte Mischung ruhen läßt, so daß die Hydrolyse in der Verpackung stattfindet.

2. Verfahren nach Anspruch 1, **dadurch gekennzeichnet, daß** man jedes flüssige Ausgangsmaterial behandelt, das Proteine pflanzlichen oder tierischen Ursprungs enthält, und zwar als pflanzliche Proteine insbesondere Proteine von Getreide und Hülsenfrüchten, insbesondere Soja oder Reis, und als tierisches Proteinmaterial eine Molke der Käseherstellung, insbesondere Süßmolke, wie sie bei der Koagulation von Casein durch Lab entsteht, Sauermolke, die von der Koagulation von Casein durch eine Säure oder durch ansäuernde Fermente stammt, oder eine gemischte Molke, die sich aus einer Säure- und Labkoagulation ergibt, sowie derartige Ausgangsstoffe in entmineralisierter, konzentrierter Form, allein oder in Mischung.

3. Verfahren nach Anspruch 2, **dadurch gekennzeichnet, daß** man ein mehr oder weniger von Lactose befreites Molkeproteinkonzentrat, das insbesondere durch Ultrafiltration und ggf. darauffolgende Diafiltration erhalten wurde, eine Molke oder ein Molkeproteinkonzentrat, die bzw. das insbesondere durch Ionenaustausch, Elektrodialyse, Elektroentionisierung oder durch eine Kombination dieser Methoden mehr oder weniger entmineralisiert wurde, Magermilch oder ein Caseinat behandelt.

4. Verfahren nach Anspruch 1, **dadurch gekennzeichnet, daß** das flüssige Ausgangsmaterial nicht-hydrolysiert sein kann oder partiell hydrolysiert sein kann.

5. Verfahren nach Anspruch 1, **dadurch gekennzeichnet, daß** man nach dem Auflösen der Bestandteile des Ausgangsmaterials in insbesondere entionisiertem Wasser die flüssige Mischung vorerhitzt, ihr Fett und einen Emulgator zusetzt, dann die Mischung homogenisiert und ihr Kohlenhydrate, Mineralstoffe, Vitamine und Spurenelemente zusetzt.

6. Verfahren nach Anspruch 1, **dadurch gekennzeichnet, daß** man ein nicht-hydrolysiertes Ausgangsmaterial verwendet, daß man die Flüssigkeit thermisch durch UHT behandelt, sie durch Flash-Entspannung kühlt, sie keimfrei homogenisiert, ihr dann eine durch Mikrofiltration sterilisierte wässrige Enzymlösung zusetzt und die sterile Mischung in einem Behälter mit einem sterilen Puffer lagert, dessen pH durch Zusetzen einer wässrigen Baselösung, die getrennt sterilisiert wurde, auf etwa 8 eingestellt wird.

7. Verfahren nach Anspruch 1, **dadurch gekennzeichnet, daß** man ein partiell hydrolysiertes Ausgangsmaterial verwendet, daß man den pH-Wert der flüssigen Mischung auf einen Wert > 7 einstellt, daß man die Flüssigkeit durch UHT thermisch behandelt, daß man sie durch Flash-Entspannung kühlt und dann keimfrei homogenisiert, daß man ihr eine durch Mikrofiltration sterilisierte wässrige Enzymlösung zusetzt und daß man die sterile Mischung in einem sterilen Pufferbehälter lagert.

8. Verfahren nach Anspruch 1, **dadurch gekennzeichnet, daß** man als Enzym eine Protease verwendet, die im neutralen bis alkalischen Bereich wirkt und die mikrobiellen oder tierischen Ursprungs, insbesondere vom Schwein oder Rind, sein kann, und die vorzugsweise aus Trypsin, Chymotrypsin, einer Mischung von Trypsin und Chymotrypsin und Pancreatin in Rohform oder vorzugsweise in gereinigter Form ohne Lipase- oder Phospholipase-A2-Restaktivität ausgewählt ist.

9. Verfahren nach Anspruch 1, **dadurch gekennzeichnet, daß** man Verpackungen keimfrei füllt, daß man luftdicht verschließt, daß die Füllung bei einer Temperatur von Raumtemperatur bis 65°C stattfindet, daß man dann die gefüllten Verpackungen während einer Zeit von einigen h bis 1 Woche bei 55-65°C hält, so daß die Hydrolyse bis zum Gleichgewicht stattfindet, indem das gesamte Enzym verbraucht wird.

10. Nahrungsmittel auf der Basis von Proteinhydrolysat in flüssiger Form, das mit Hilfe des Verfahrens nach einem der Ansprüche 1 bis 9 erhältlich ist.
